# EUROPEAN PATENT APPLICATION

(11) **EP 4 534 968 A1**
(43) Date of publication of application: **09.04.2025**
(21) Application number: 23815581.6
(22) Date of filing: 06.04.2023
(51) Int. Cl.: G01L 9/00, G01L 7/00, G01L 19/06, G01L 19/14

(54) **PRESSURE SENSOR**

(30) Priority: 31.05.2022 JP 2022088556
(71) Applicant: HITACHI HIGH-TECH CORPORATION, Tokyo 105-6409 (JP)
(72) Inventor: YAMASAKI, Tatsuya, Tokyo 100-8280 (JP); KANAMARU, Masatoshi, Tokyo 100-8280 (JP); AONO, Takanori, Tokyo 100-8280 (JP); SUZUKI, Yoichiro, Tokyo 105-6409 (JP)
(74) Representative: Strehl & Partner mbB
(86) International application number: PCT/JP2023/014233
(87) International publication number: WO 2023/233819

(57) **Abstract**

The present invention provides a pressure sensor in which a decrease in sensitivity or leakage of a fluid can be prevented even when the pressure sensor receives pressure from the fluid. This pressure sensor according to the present invention comprises a housing (32) having a space inside that is a fluid flow channel (33), a sensor chip (31) that comprises a strain detection part (31b) and is constituted from a thin-film semiconductor, and a strain transmission material (36) that is provided inside the housing (32). The strain transmission material (36) comprises a pressure-receiving surface (36a) in contact with the space that is a flow channel (33), and a bonding surface (36b) that is positioned on the opposite side of the strain transmission material (36) from the pressure-receiving surface (36a) and is fixed to an inside surface of the housing (32). The entire sensor chip (31) is embedded inside the strain transmission material (36).

## Description

### Technical Field

The present invention relates to a pressure sensor, particularly to a pressure sensor that can be provided in a dispensing device.

### Background Art

A pressure sensor for measuring a pressure of a fluid is implemented by, for example, a thin-film semiconductor strain sensor, and is used in a dispensing device. The dispensing device is provided in, for example, an automatic analyzer, and aspirates or discharges a sample (specimen) or a reagent which is a liquid by a nozzle. The pressure sensor provided in the dispensing device may be used to detect an abnormality such as clogging or air suction of the nozzle.

PTL 1 describes an example of a pressure sensor in the related art that measures a pressure of a fluid. The pressure sensor disclosed in PTL 1 includes a sensor chip supported by a base plate. The sensor chip includes a sensor diaphragm that generates strain according to the pressure of the fluid, and detects the pressure. The base plate is bonded to a support diaphragm. A center portion of the support diaphragm includes a pressure introduction hole for introducing the pressure of the fluid to the sensor chip. A pressure-receiving portion of the sensor chip is positioned in the same direction as a bonding portion of the sensor chip to the base plate with respect to the sensor chip.

### Citation List

### Patent Literature

PTL 1: JP2006-003234A

### Summary of Invention

### Technical Problem

In the pressure sensor in the related art that is implemented by the thin-film semiconductor strain sensor, as described in PTL 1, the sensor chip is generally fixed to a housing (or a base) of the pressure sensor, and the bonding portion of the sensor chip to the housing and the pressure-receiving portion of the sensor chip are generally at positions in the same direction with respect to the sensor chip. In this structure, a fluid flow channel is formed in the housing, and not only the pressure-receiving portion of the sensor chip but also the bonding portion of the sensor chip to the housing is in direct contact with the fluid. Therefore, when the bonding portion of the sensor chip to the housing receives the pressure of the fluid, a tensile stress is generated in a direction in which the bonding portion is peeled off from the housing, and the bonding portion may be peeled off from the housing. The peeling off of the bonding portion of the sensor chip to the housing causes a decrease in sensitivity of the pressure sensor and a leakage of the fluid from the bonding portion. As described above, in the pressure sensor in the related art, there is a concern that when the pressure from the fluid is received, the tensile stress is generated in the bonding portion of the sensor chip to the housing, which causes the decrease in the sensitivity or the leakage of the fluid.

An object of the invention is to provide a pressure sensor in which a decrease in sensitivity or a leakage of a fluid can be prevented even when the pressure sensor receives a pressure from the fluid.

### Solution to Problem

A pressure sensor according to the invention includes: a housing having therein a space serving as a fluid flow channel; a sensor chip including a strain detection unit and formed of a thin-film semiconductor; and a strain transmission material provided inside the housing. The strain transmission material includes a pressure-receiving surface in contact with the space, and a bonding surface positioned at an opposite side of the strain transmission material from the pressure-receiving surface and fixed to an inner surface of the housing. The entire sensor chip is embedded in the strain transmission material.

### Advantageous Effects of Invention

According to the invention, it is possible to provide a pressure sensor in which a decrease in sensitivity or a leakage of a fluid can be prevented even when the pressure sensor receives a pressure from the fluid.

### Brief Description of Drawings

[FIG. 1] FIG. 1 is a diagram showing a basic configuration of a dispensing device including a pressure sensor according to Embodiment 1 of the invention.
[FIG. 2] FIG. 2 is a diagram showing an internal state of a pipe in an arm immediately after a nozzle aspirates a liquid.
[FIG. 3] FIG. 3 is a schematic view showing an example of a cross section of a pressure sensor in the related art.
[FIG. 4A] FIG. 4A is an exploded perspective view of the pressure sensor according to Embodiment 1.
[FIG. 4B] FIG. 4B is a cross-sectional view of the pressure sensor according to Embodiment 1 taken along a plane orthogonal to a direction of a flow channel.
[FIG. 5] FIG. 5 is an exploded perspective view showing only a sensor chip, a bonding wire, and a lead frame in the pressure sensor according to Embodiment 1.
[FIG. 6] FIG. 6 is an exploded perspective view showing only a sensor chip, a bonding wire, a lead frame, and a cap member in a pressure sensor according to Embodiment 2 of the invention.

### Description of Embodiments

A pressure sensor according to the invention includes a housing constituting a fluid flow channel and a sensor chip provided inside the housing, and even when the pressure sensor receives a pressure from a fluid, a tensile stress is not generated in a bonding portion of the sensor chip to the housing, so that a decrease in sensitivity or a leakage of the fluid can be prevented. Therefore, the invention can provide a highly reliable pressure sensor.

Hereinafter, a pressure sensor according to an embodiment of the invention will be described with reference to the drawings. In the drawings used in the present specification, the same or corresponding components are denoted by the same reference numerals, and repeated description of these components may be omitted.

### Embodiment 1

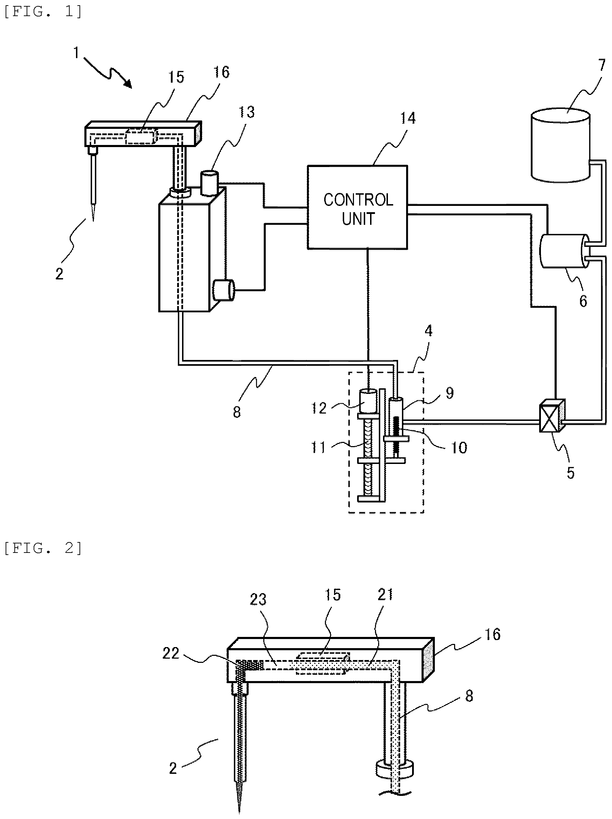

A pressure sensor according to Embodiment 1 of the invention will be described with reference to FIGS. 1 to 5. Hereinafter, a configuration in which the pressure sensor according to the present embodiment is provided in a sample dispensing mechanism of a dispensing device will be described as an example.

FIG. 1 is a diagram showing a basic configuration of a dispensing device 1 including a pressure sensor 15 according to the present embodiment. The dispensing device 1 includes a flow channel system, a sample dispensing mechanism 13, and a control unit 14.

The flow channel system of the dispensing device 1 includes a nozzle 2, a syringe pump 4, a solenoid valve 5, a gear pump 6, and a tank 7 that stores system water, and these components are connected by a pipe 8. The sample dispensing mechanism 13 includes an arm 16 including a nozzle 2, and aspirates and discharges a liquid (for example, a sample or the system water) through the nozzle 2. The control unit 14 controls the dispensing device 1. For example, a motor for driving the sample dispensing mechanism 13 or the like is controlled by the control unit 14.

The syringe pump 4 includes a container 9, a plunger 10, a ball screw 11, and a drive motor 12. The drive motor 12 is controlled by the control unit 14.

The arm 16 includes the pressure sensor 15 according to the present embodiment therein. Since the arm 16 moves the nozzle 2 to a position where the liquid is aspirated and discharged, the arm 16 can be rotationally moved and moved up and down.

FIG. 2 is a diagram showing an internal state of the pipe 8 in the arm 16 immediately after the nozzle 2 aspirates the liquid.

An inside of the pipe 8 is filled with system water 21 which is water for syringe pressure transmission. A pressure due to the syringe pump 4 is transmitted into the pipe 8, so that the nozzle 2 can aspirate or discharge a liquid 22 (for example, the sample or the system water).

When the nozzle 2 aspirates the liquid 22, the plunger 10 in the syringe pump 4 is pulled from the container 9 while the solenoid valve 5 is in a closed state. When the nozzle 2 discharges the liquid 22, the plunger 10 in the syringe pump 4 is pushed into the container 9 while the solenoid valve 5 is in the closed state. When the nozzle 2 aspirates the liquid 22 such as the sample, the nozzle 2 aspirates the liquid 22 after aspirating dividing air 23 for division, so that the liquid 22 does not mix with the system water 21 in the pipe 8.

After the nozzle 2 discharges the liquid 22, cleaning of the nozzle 2 is performed. During the cleaning of the nozzle 2, the system water 21 inside the nozzle 2 is pushed out of the nozzle 2 simultaneously with application of cleaning water to an outer wall of the nozzle 2. When the system water 21 is pushed out of the nozzle 2 during the cleaning of the nozzle 2, the solenoid valve 5 is opened to utilize a pressure of the gear pump 6. Therefore, during the cleaning of the nozzle 2, the system water 21 is pushed out under a pressure higher than that when being pushed out by the syringe pump 4.

In the dispensing device 1, the pressure sensor 15 is provided on the pipe 8 in order to detect an abnormality such as clogging or air suction of the nozzle 2, which may occur during a dispensing operation. The pressure sensor 15 monitors a pressure of the system water 21, and detects a pressure change occurring when the abnormality occurs in the nozzle 2.

An arrangement position of the pressure sensor 15 can be freely determined. In the present embodiment, as an example, in order to sense the pressure change of the nozzle 2 sensitively, the pressure sensor 15 is provided inside the arm 16 at a position relatively close to the nozzle 2. The pressure sensor 15 is not limited to being provided inside of the arm 16, and may be provided on, for example, a side surface of the sample dispensing mechanism 13.

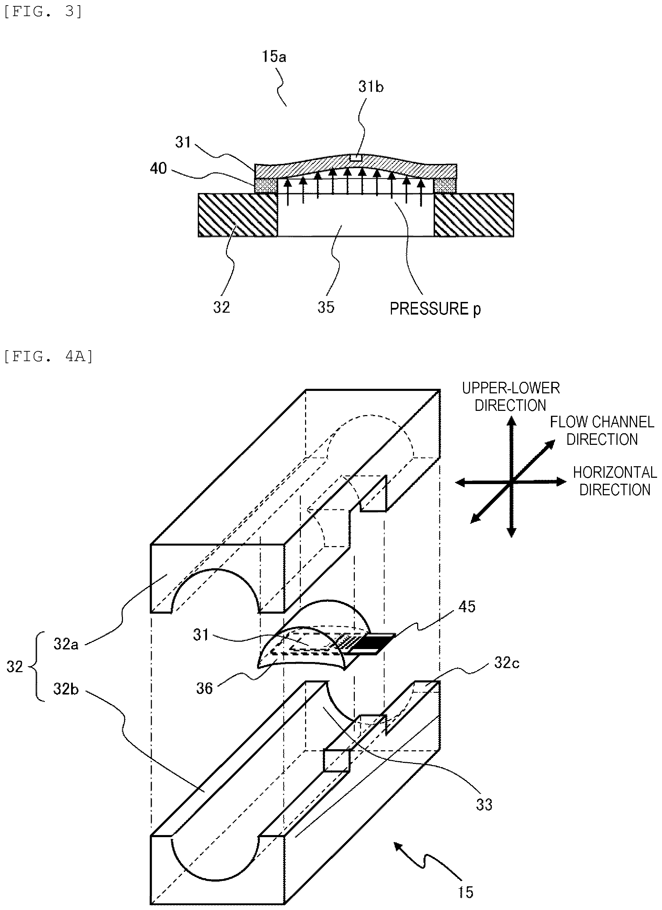

A structure of a general pressure sensor in the related art and problems thereof will be described with reference to FIG. 3.

FIG. 3 is a schematic view showing an example of a cross section of a pressure sensor 15a in the related art. The pressure sensor 15a includes a sensor chip 31 formed of a thin-film semiconductor and a housing 32 to which the sensor chip 31 is bonded, and a fluid flowing through a flow channel 35 is a measurement target. A strain gauge portion 31b is provided on a surface of a center portion of the sensor chip 31. The cross section shown in FIG. 3 is a cross section taken along a plane passing through the strain gauge portion 31b and along a normal direction of the sensor chip 31. FIG. 3 shows the sensor chip 31 deformed by receiving a pressure p from the fluid.

The sensor chip 31 is disposed to receive the pressure p of the fluid flowing through the flow channel 35, and is bonded to the housing 32 by a bonding agent 40. The fluid flowing through the flow channel 35 as the measurement target is, for example, the system water 21. The sensor chip 31 is further deformed by the pressure p of the fluid as the measurement target, and measures the pressure p of the fluid as the measurement target by measuring strain due to the deformation. The strain is measured by the strain gauge portion 31b.

In the pressure sensor 15a, when the sensor chip 31 is deformed by receiving the pressure p from the fluid as the measurement target, a force in a direction in which the joint is peeled off is generated on a bonding surface between the sensor chip 31 and the bonding agent 40 and a bonding surface between the housing 32 and the bonding agent 40. For this reason, in the pressure sensor 15a in the related art, there is a concern that the sensor chip 31 may be peeled off from the housing 32 when the sensor chip 31 receives an excessive pressure or a repeated pressure. Further, in the pressure sensor 15a in the related art, since a part of the surface of the sensor chip 31 or the bonding surface described above is in contact with the fluid as the measurement target or outside air, there is a concern that deterioration of the bonding surface or a decrease in a bonding force may occur due to an influence of a humidity on the fluid as the measurement target or the outside air.

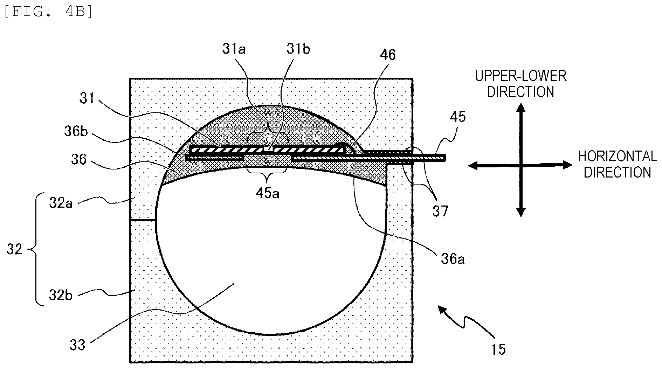

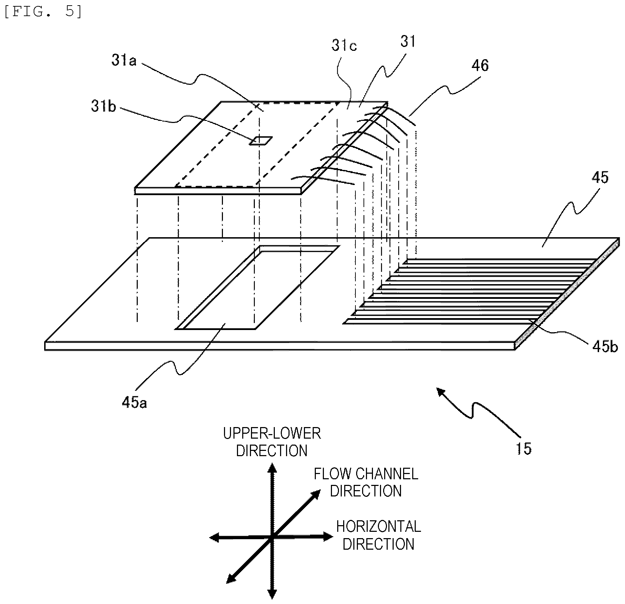

The pressure sensor 15 according to the present embodiment can solve these problems. A structure and characteristics of the pressure sensor 15 according to the present embodiment will be described with reference to FIGS. 4A, 4B, and 5.

FIGS. 4A and 4B are diagrams showing an example of the structure of the pressure sensor 15 according to the present embodiment. FIG. 4A is an exploded perspective view of the pressure sensor 15. FIG. 4B is a cross-sectional view of the pressure sensor 15 taken along a plane orthogonal to an extending direction of a flow channel.

The pressure sensor 15 includes the sensor chip 31 formed of the thin-film semiconductor, the housing 32 accommodating the sensor chip 31, and a strain transmission material 36 provided inside the housing 32, and a fluid flowing through a flow channel 33 is the measurement target. The fluid flow channel 33 is a space formed inside the housing 32. The strain gauge portion 31b as a strain detection unit is provided on the surface of the center portion of the sensor chip 31. The fluid flowing through the flow channel 33 as the measurement target is, for example, the system water 21.

The cross section shown in FIG. 4B is a cross section taken along a plane (plane along the normal direction of the sensor chip 31) passing through the strain gauge portion 31b and orthogonal to a direction in which the fluid flows through the flow channel 33.

Here, the normal direction of the sensor chip 31 is defined as a "upper-lower direction", an extending direction of the flow channel 33 (the direction in which the fluid flows through the flow channel 33) is defined as a "flow channel direction", and a direction orthogonal to the upper-lower direction and the flow channel direction is defined as a "horizontal direction".

The housing 32 includes an upper housing 32a and a lower housing 32b positioned below the upper housing 32a, and includes, in the housing 32, the flow channel 33 through which the system water 21 flows. The upper housing 32a and the lower housing 32b are in contact with each other, and a contact surface 32c of the upper housing 32a and the lower housing 32b is sealed with a sealing member, so that the system water 21 does not leak from the housing 32. For example, an O-ring or a sealing agent can be used as the sealing member. It should be noted that it is not always necessary for the housing 32 to be constituted by two parts (the upper housing 32a and the lower housing 32b), and for example, the housing 32 may be configured with one part, for example, by insert molding, or may be configured with three or more parts.

Screw portions (not shown) are provided at both ends of the flow channel 33 in the flow channel direction. The flow channel 33 can be connected to the pipe 8 of the dispensing device 1 via a joint by the screw portion.

The strain transmission material 36 is fixed to an inner surface of the housing 32 (that is, a wall surface of the flow channel 33). A surface of the strain transmission material 36 fixed to the inner surface of the housing 32 is referred to as a bonding surface 36b. When coming into contact with the system water 21 flowing through the flow channel 33, the strain transmission material 36 is compressed by a pressure of the system water 21. A surface of the strain transmission material 36 in contact with the system water 21 is referred to as a pressure-receiving surface 36a. The pressure-receiving surface 36a is a surface that is in contact with the space that is the fluid flow channel 33 and receives the pressure of the system water 21. The bonding surface 36b is positioned at an opposite side of the strain transmission material 36 from the pressure-receiving surface 36a. The strain transmission material 36 can be made of a flexible elastic body, and can be made of a gel substance such as silicone gel.

The pressure sensor 15 may include a lead frame 45 electrically connected to the sensor chip 31. The lead frame 45 is provided to be in contact with the sensor chip 31 in the upper-lower direction. Note that a upper-lower relationship between positions of the lead frame 45 and the sensor chip 31 can be freely determined, and either the lead frame 45 or the sensor chip 31 may be provided on an upper side (position close to the inner surface of the housing 32 in FIG. 4B). In the present embodiment, as an example, the sensor chip 31 is positioned on the upper side of the lead frame 45.

The entire sensor chip 31 and a part of the lead frame 45 are embedded inside the strain transmission material 36.

The lead frame 45 includes an aperture 45a which is an opening (hole) penetrating the lead frame 45. The aperture 45a opens in a range facing a portion of the sensor chip 31 including the strain gauge portion 31b. That is, a portion of the lead frame 45 facing the strain gauge portion 31b of the sensor chip 31 and a peripheral portion thereof is opened as the aperture 45a.

A portion of the sensor chip 31 released by the aperture 45a (that is, a portion facing the aperture 45a) is a diaphragm portion 31a which is a deformation portion. The lead frame 45 includes the aperture 45a, so that the strain generated by the compression of the strain transmission material 36 is transmitted from the strain transmission material 36 to the diaphragm portion 31a of the sensor chip 31, and the diaphragm portion 31a is bent and deformed. The sensor chip 31 measures the pressure of the system water 21 flowing through the flow channel 33 inside the housing 32 by measuring the strain with the strain gauge portion 31b.

The lead frame 45 is provided to extract an output from the sensor chip 31. A lead portion of the lead frame 45 is electrically connected to an electrode portion of the sensor chip 31 by a bonding wire 46. A part of the lead frame 45 protrudes to an outside of the housing 32, and the lead portion extends to a protruding portion. A sealing member 37 seals between the lead frame 45 and the housing 32. Any member can be used as the sealing member 37, for example, the strain transmission material 36 may be used as the sealing member 37, an O-ring may be used, or a gasket or the like formed on the lead frame 45 may be used.

The sensor chip 31 can be electrically connected to the outside of the housing 32 by the lead portion of the lead frame 45. In the pressure sensor in the related art, when the sensor chip 31 is provided inside the housing 32, it is difficult to electrically connect the sensor chip 31 to the outside of the housing 32 by connecting a wire to the sensor chip 31. In the pressure sensor 15 according to the present embodiment, the sensor chip 31 can be electrically connected to the outside of the housing 32 by the lead frame 45 electrically connected to the sensor chip 31.

The characteristics of the pressure sensor 15 according to the present embodiment are that the strain transmission material 36 includes the pressure-receiving surface 36a that is in contact with the fluid flow channel 33 and receives the pressure from the fluid, and the bonding surface 36b that is positioned at the opposite side of the strain transmission material 36 from the pressure-receiving surface 36a and is in contact with the inner surface of the housing 32 (that is, the wall surface of the flow channel 33), and that the entire sensor chip 31 is embedded in the strain transmission material 36.

Due to the characteristic that the bonding surface 36b is positioned at the opposite side of the strain transmission material 36 from the pressure-receiving surface 36a, in the strain transmission material 36, when the pressure-receiving surface 36a receives the pressure from the fluid, a compressive stress is generated in the bonding surface 36b. That is, in the strain transmission material 36, when the pressure-receiving surface 36a receives the pressure from the fluid, a force is generated in a direction in which the bonding surface 36b is pressed against the housing 32, and thus in principle, the bonding surface 36b does not peel off from the housing 32.

Due to the characteristic that the entire sensor chip 31 is embedded in the strain transmission material 36, a boundary surface between the sensor chip 31 and the strain transmission material 36 is not exposed to the system water 21 or the outside air. Therefore, the decrease in the bonding force between the sensor chip 31 and the strain transmission material 36 due to the humidity of the system water 21 or the outside air does not occur.

Accordingly, even when receiving the pressure from the fluid, the pressure sensor 15 according to the present embodiment can prevent a decrease in sensitivity of the sensor chip 31 due to the peeling off and a leakage of the fluid from a portion to which the sensor chip 31 is bonded.

FIG. 5 is an exploded perspective view showing only the sensor chip 31, the bonding wire 46, and the lead frame 45 in the pressure sensor 15 according to the present embodiment. An electrode portion 31c of the sensor chip 31 is electrically connected to a lead portion 45b of the lead frame 45 by the bonding wire 46.

The aperture 45a provided in the lead frame 45 preferably has a shape having a longitudinal direction and a lateral direction, for example, a rectangular shape, an elliptical shape, or a rounded rectangular shape. FIG. 5 shows, as an example, the aperture 45a having the rectangular shape in which the longitudinal direction is the flow channel direction and the lateral direction is the horizontal direction.

The diaphragm portion 31a of the sensor chip 31 is a portion of the sensor chip 31 that is released by the aperture 45a. For this reason, a shape of the diaphragm portion 31a is determined according to the shape of the aperture 45a, and is preferably a shape having the longitudinal direction and the lateral direction, for example, a rectangular shape, an elliptical shape, or a rounded rectangular shape.

When the diaphragm portion 31a having the longitudinal direction and the lateral direction is deformed by receiving the pressure from the system water 21, a difference in a magnitude occurs between strain in the longitudinal direction and strain in the lateral direction in the strain gauge portion 31b.

Where the diaphragm portion 31a has the shape having the longitudinal direction and the lateral direction, it is preferable to use, as the sensor chip 31, a sensor chip that detects the respective strain in the longitudinal direction and the lateral direction of the strain gauge portion 31b and outputs a difference in the strain therebetween. By using such a sensor chip 31 capable of detecting anisotropy of the strain, the pressure sensor 15 can improve pressure detection sensitivity. An existing sensor chip can be used as such a sensor chip 31.

In addition, when such a sensor chip 31 is used, it is possible to reduce an influence of thermal strain that generates isotropic strain, that is, an influence of a temperature change. Accordingly, the pressure sensor 15 can reduce a change in output characteristics due to the temperature change.

It is preferable that the strain transmission material 36 is made of a material having rigidity sufficiently smaller than rigidity of the housing 32. In general, the housing 32 is made of a material having sufficiently high rigidity, so that deformation due to the pressure of the system water 21 is sufficiently small. The strain transmission material 36 has rigidity sufficiently smaller than that of the housing 32, so that only the strain transmission material 36 is efficiently deformed due to a water pressure of the system water 21. Accordingly, the pressure sensor 15 can improve the pressure detection sensitivity.

### Embodiment 2

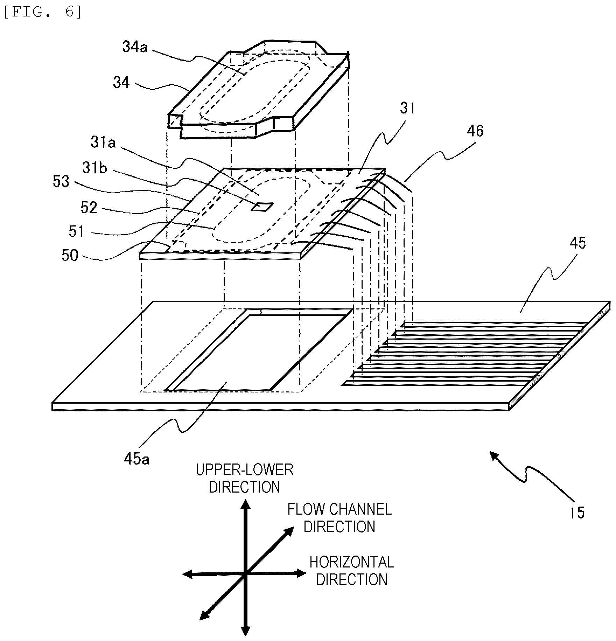

A pressure sensor according to Embodiment 2 of the invention will be described with reference to FIG. 6. The pressure sensor 15 according to the present embodiment has the same configuration as the pressure sensor 15 according to Embodiment 1, but is different from the pressure sensor 15 according to Embodiment 1 in that the sensor chip 31 includes a cap member. Hereinafter, the pressure sensor 15 according to the present embodiment will be described mainly with respect to the differences from the pressure sensor 15 according to Embodiment 1.

FIG. 6 is an exploded perspective view showing only the sensor chip 31, the bonding wire 46, the lead frame 45, and a cap member 34 in the pressure sensor 15 according to the present embodiment.

The cap member 34 is a member that is provided on the surface of the sensor chip 31 and covers and protects the strain gauge portion 31b. The cap member 34 is provided on the surface of the sensor chip 31 opposite a surface in contact with the lead frame 45 in the upper-lower direction, and is embedded in the strain transmission material 36. The cap member 34 may be made of, for example, silicon, and is bonded to the sensor chip 31 using an adhesive member such as a thermosetting adhesive.

The cap member 34 includes a cavity 34a. The cavity 34a is a recess provided in a surface of the cap member 34 in contact with the sensor chip 31 and surrounding a periphery of the strain gauge portion 31b. A portion of the sensor chip 31 facing the cavity 34a is deformable, and the deformable portion functions as the diaphragm portion 31a. The cavity 34a preferably has a shape having the longitudinal direction and the lateral direction, for example, a rectangular shape, an elliptical shape, or a rounded rectangular shape. FIG. 6 shows, as an example, the cavity 34a having the elliptical shape (oval) in which the longitudinal direction is the flow channel direction and the lateral direction is the horizontal direction.

An outline of the cavity 34a when the cavity 34a is projected onto the sensor chip 31 is referred to as an outer shape projection line 51 of the cavity 34a. An outline of the aperture 45a when the aperture 45a is projected onto the sensor chip 31 is referred to as an outer shape projection line 50 of the aperture 45a. An outline of the cap member 34 when the cap member 34 is projected onto the sensor chip 31 is referred to as an outer shape projection line 52 of the cap member 34. In the pressure sensor 15 according to the present embodiment, the outer shape projection line 51 of the cavity 34a is positioned closer to a strain gauge portion 31b side (inside) than the outer shape projection line 50 of the aperture 45a, and the outer shape projection line 52 of the cap member 34 is positioned more inward than the outline 53 of the sensor chip 31.

The sensor chip 31 included in the pressure sensor 15 according to the present embodiment is small, and is generally manufactured by using a semiconductor process to dice a sensor chip formed in a lattice shape on a silicon wafer into a rectangular shape. Since the outer shape projection line 52 of the cap member 34 is positioned more inward than the outline 53 of the sensor chip 31, it is possible to adopt a manufacturing method in which the cap member 34 is formed by a semiconductor process on the wafer on which the sensor chip is formed and then is diced. Accordingly, an external dimension and an arrangement position of the cap member 34 can be determined with high accuracy using the semiconductor process.

The outer shape projection line 51 of the cavity 34a is positioned more inward than the outer shape projection line 50 of the aperture 45a, so that the shape of the diaphragm portion 31a is determined by the outer shape projection line 51 of the cavity 34a. The cap member 34 can be manufactured with higher accuracy by the semiconductor process. Therefore, in the pressure sensor 15 according to the present embodiment, a manufacturing variation of the shape of the diaphragm portion 31a determined by the shape of the cavity 34a of the cap member 34 can be extremely reduced. Accordingly, the variation in the sensitivity of the sensor chip 31 due to the variation in the shape of the diaphragm portion 31a can also be reduced.

The pressure sensor 15 according to the present embodiment has an effect of reducing variations in the sensitivity of the sensor chip 31 in addition to the effect of the pressure sensor 15 according to Embodiment 1.

The invention is not limited to the above-described embodiments and may include various modifications. For example, the embodiments have been described in detail to facilitate understanding of the invention, and the invention is not necessarily limited to those including all configurations described above. A part of configurations of one embodiment can be replaced with a configuration of another embodiment. A configuration of another embodiment can be added to a configuration of one embodiment. A part of a configuration in each embodiment may be deleted, or may be added with or replaced with another configuration.

### Reference Signs List

1: dispensing device
2: nozzle
4: syringe pump
5: solenoid valve
6: gear pump
7: tank
8: pipe
9: container
10: plunger
11: ball screw
12: drive motor
13: sample dispensing mechanism
14: control unit
15: pressure sensor
15a: pressure sensor of related art
16: arm
21: system water
22: liquid
23: dividing air
31: sensor chip
31a: diaphragm portion
31b: strain gauge portion
31c: electrode portion
32: housing
32a: upper housing
32b: lower housing
32c: contact surface between upper housing and lower housing
33: flow channel
34: cap member
34a: cavity
35: flow channel
36: strain transmission material
36a: pressure-receiving surface
36b: bonding surface
37: sealing member
40: bonding agent
45: lead frame
45a: aperture
45b: lead portion
46: bonding wire
50: outer shape projection line of aperture
51: outer shape projection line of cavity
52: outer shape projection line of cap member
53: outline of sensor chip

## Claims

1. A pressure sensor comprising:
a housing having therein a space serving as a fluid flow channel;
a sensor chip including a strain detection unit and formed of a thin-film semiconductor; and
a strain transmission material provided inside the housing, wherein
the strain transmission material includes a pressure-receiving surface in contact with the space, and a bonding surface positioned at an opposite side of the strain transmission material from the pressure-receiving surface and fixed to an inner surface of the housing, and
the entire sensor chip is embedded inside the strain transmission material.

2. The pressure sensor according to claim 1, wherein
the strain transmission material has rigidity smaller than that of the housing.

3. The pressure sensor according to claim 1, further comprising:
a lead frame provided in contact with the sensor chip and electrically connected to an electrode of the sensor chip, wherein
the lead frame includes an opening that opens in a range facing a portion of the sensor chip including the strain detection unit.

4. The pressure sensor according to claim 3, further comprising:
a cap member provided on a surface of the sensor chip opposite a surface in contact with the lead frame, wherein
the cap member includes a recess having a shape having a longitudinal direction and a lateral direction and surrounding a periphery of the strain detection unit on a surface in contact with the sensor chip, and
when the recess, the opening, and the cap member are projected onto the sensor chip, an outline of the projected recess is positioned more inward than an outline of the projected opening, and an outline of the projected cap member is positioned more inward than an outline of the projected sensor chip.

5. The pressure sensor according to claim 3, wherein
a part of the lead frame is embedded in the strain transmission material, and another part of the lead frame protrudes to an outside of the housing.
